# EUROPÄISCHE PATENTANMELDUNG

(11) **EP 1 267 547 A2**
(43) Veröffentlichungstag der Anmeldung: **18.12.2002**
(21) Anmeldenummer: 02010874.2
(22) Anmeldetag: 15.05.2002
(51) Int. Cl.: H04L 29/06

(54) **Verfahren und Vorrichtung zur Bearbeitung von Daten**

(30) Priorität: 18.05.2001 DE 10124355
(71) Anmelder: SIEMENS AKTIENGESELLSCHAFT, 80333 München (DE)
(72) Erfinder: Kallauch, Wolfgang, 91056 Erlangen (DE)

(57) **Zusammenfassung**

Die Erfindung betrifft ein Verfahren und eine Vorrichtung zur Bearbeitung von Daten, wobei diese von mindestens drei Einheiten, von denen mindestens eine eine Station (1 bis 5) zur Eingabe und Ausgabe von Daten eines Projekts und mindestens eine ein Prozessor (7 bis 11) ist, ausgestauscht werden. Es ist vorgesehen, dass durch ein Portal (6) die Signale der Station(en) (1 bis 5) in von dem(den) Prozessor(en) (7 bis 11) lesbare Signale umgewandelt werden und/oder Signale des Prozessors(der Prozessoren) (7 bis 11) durch das Portal (6) in von der(den) Station(en) (1 bis 5) lesbare Signale umgewandelt werden.

## Beschreibung

Die Erfindung betrifft ein Verfahren zur Bearbeitung von Daten, wobei diese von mindestens drei Einheiten, von denen mindestens eine eine Station zur Eingabe und Ausgabe von Daten eines Projekts und mindestens eine ein Prozessor ist, ausgetauscht werden.

Die Erfindung betrifft auch eine Vorrichtung zur Bearbeitung von Daten mit mindestens drei Einheiten, von denen mindestens eine eine Station zur Eingabe und Ausgabe von Daten eines Projekts und mindestens eine ein Prozessor ist.

Bei einem Projektmanagement und auch bei einer Projektabwicklung, z.B. bei der Bestellung, Herstellung und Lieferung eines Gerätes, oder einer komplexen Anlage, z.B. einem kompletten Bahnsystem einer Raffinerie, einem Werk etc., ist es häufig erforderlich, dass Beteiligte von verschiedenen Orten aus auf verschiedene Prozessoren zugreifen müssen, die ihrerseits an verschiedenen Orten stehen können. Es ist also erforderlich, mindestens eine, in der Regel aber mehrere Stationen, zur Eingabe und Ausgabe von Daten mit mindestens einem, in der Regel aber mehreren Prozessoren, zu vernetzen.

Die verschiedenen Stationen und Prozessoren sind häufig nicht aufeinander abgestimmt. Es kommt dadurch zu Problemen an den Schnittstellen, sowie auch zur mehrfachen Erfassung von Daten.

Es ist bereits bekannt, in verschiedenen Prozessoren übereinstimmende Daten abzulegen, da auf die einzelnen Prozessoren jeweils nur von bestimmten Stationen aus zugegriffen werden kann.

Es ist auch schon bekannt, eine Station zur Eingabe und Ausgabe von Daten an mehrere Prozessoren anzuschließen, wobei jedoch stets die richtige Zugriffsberechtigung ausgewählt werden muss.

Der Erfindung liegt die Aufgabe zugrunde, ein Verfahren und eine Vorrichtung zur Bearbeitung von Daten anzugeben, die schnell und zuverlässig funktionieren und insbesondere von verschiedenen Standorten aus Zugriffe auf unterschiedliche Prozessoren mit geringem Aufwand gestatten.

Die Aufgabe, ein geeignetes Verfahren anzugeben, wird gemäß der Erfindung dadurch gelöst, dass ein Signal der Station(en) in ein von dem(den) Prozessor(en) lesbares Signal und/oder ein Signal des Prozessors(der Prozessoren) in ein von der(den) Station(en) lesbares Signal umgewandelt werden.

Mit der Umwandlung von Signalen wird der Vorteil erzielt, dass zahlreiche Stationen mit zahlreichen Prozessoren einfach und schnell kommunizieren können, selbst falls jede Station und jeder Prozessor nur bestimmte Signale senden oder entgegennehmen können.

Das vom Prozessor lesbare Signal und/oder das Signal des Prozessors werden beispielsweise über das Internet versandt. Entsprechend kann das Signal der Station und/oder das von der Station lesbare Signal beispielsweise über das Internet versandt werden. Ebenso ist es möglich, alle genannten Signale über das Internet zu versenden.

Unterschiede der drei Varianten sind darin zu sehen, dass die Umwandlung von Signalen entweder an den Stationen oder an den Prozessoren oder an einem dritten Ort erfolgen kann.

Die lesbaren Signale werden beispielsweise standardisiert. Damit ist eine weltweite Verknüpfung in einfacher Weise möglich.

Mit dem Verfahren nach der Erfindung wird der Vorteil erzielt, dass ein Beteiligter an einem Projekt von seiner Station aus jeden entfernten Prozessor unabhängig von dessen spezifischen Eigenschaften und Zugriffvorschriften erreichen kann. Die Bearbeitung eines Vorganges wird dadurch vereinfacht und beschleunigt.

Die Aufgabe, eine geeignete Vorrichtung anzugeben, wird gemäß der Erfindung dadurch gelöst, dass zwischen die mindestens eine Station und den mindestens einen Prozessor ein Portal geschaltet ist, in dem ein Wandler vorhanden ist zum Umwandeln eines Signals der Station(en) in ein von dem(den) Prozessor(en) lesbares Signal und/oder zum Umwandeln eines Signals des Prozessors(der Prozessoren) in ein von der Station(den Stationen) lesbares Signal.

Es können in einem Portal auch mehrere Wandler vorhanden sein.

Solange mindestens drei Einheiten vorhanden sind, können jeweils ein oder mehrere Stationen und Prozessoren vorhanden sein.

Unterschiedliche Stationen bzw. Prozessoren können z.B. nur bestimmte Signale entgegennehmen, die vorteilhafterweise vom Portal aufgrund der gesendeten Signale bereitgestellt werden.

Durch den Einsatz des Portals wird der Vorteil erzielt, dass von jeder Station aus jeder z.B. weit entfernte Prozessor unabhängig von dessen Zugriffsvorschriften schnell und zuverlässig erreicht werden kann. Im Portal wird vorteilhafterweise jedes ankommende Signal bevor es zu seinem Ziel geleitet wird, in ein dort lesbares Signal umgewandelt. Ein Beteiligter an einem Projekt braucht die Zugriffsvorschriften einzelner Prozessoren nicht mehr zu kennen.

Beispielsweise ist das Portal über das Internet mit dem mindestens einen Prozessor verbunden.

Beispielsweise kann auch die mindestens eine Station über das Internet mit dem Portal verbunden sein.

Es können auch sowohl das Portal mit den Porzessoren als auch die mindestens eine Station mit dem Portal über das Internet verbunden sein.

Bei den drei genannten Varianten ist das Portal entweder am Ort der Station zur Eingabe und Ausgabe von Daten oder am Ort des Prozessors oder an einem dritten Ort angeordnet.

Falls mehrere Stationen und mehrere Prozessoren vorhanden sind, ist es vorteilhaft, das Portal an einem zentralen Ort zu positionieren, damit die Übertragungsstrecken möglichst kurz sind.

Dem Portal ist beispielsweise ein EAI-System (Enterprise Application Integration System) zugeordnet. Ein EAI-System, das auch Middleware-System genannt wird, ist als solches bekannt. Vorteilhafterweise wird dadurch eine weltweite Verknüpfung in einfacher Weise ermöglicht.

Unter EAI-System versteht man ein System zur weltweiten Verknüpfung von
a) Informationen und Anwendungen innerhalb einer Unternehmung
b) Informationen und Anwendungen unternehmensübergreifend, die automatisiert die Kommunikation und Interoperabilität ermöglichen zur
   1) Prozessintegration, d.h. interne Prozess- und Workflowintegration
   2) Anwendungsintegration, d.h. Anpassung und Transformation von Anwendungsschnittstellen, Komponentenintegration und Transaktionsmanagement,
   3) Daten-/Infrastrukturintegration, d.h. Daten- und Plattform-Integration (Datentransferprotokoll, Nachrichtenaustausch, Datenbank-Kopplung, ETL-Tools).

Mit einem EAI-System werden sonst nicht durchgängige Systemlandschaften transparent in stabile und zukunftsträchtige Business-Architekturen unter Nutzung innovativer, standardisierter Plattformen und Schnittstellen, z.B. XML, SOAP, VDDI, EJB, umgewandelt und Geschäftsprozesse werden abgebildet und integriert. Es wird die Integration verschiedener Systeme in standardisierter Form ermöglicht. Ein EAI- oder Middleware-System wird in der Regel zwischen zwei oder mehrere Systeme geschaltet und erstreckt sich im Wesentlichen auf die Integration auf Datenebene.

Adressiermechanismen (Point-to-Point, broadcast/multicast bzw. publish-and-subscribe) werden durch das Middleware-System und die Kommunikationsart (synchron oder asynchron) geregelt.

Mit der Vorrichtung zur Bearbeitung von Daten wird der Vorteil erzielt, dass von verschiedenen Orten aus schnell und zuverlässig auf Datenmengen unterschiedlicher Prozessoren zugegriffen werden kann.

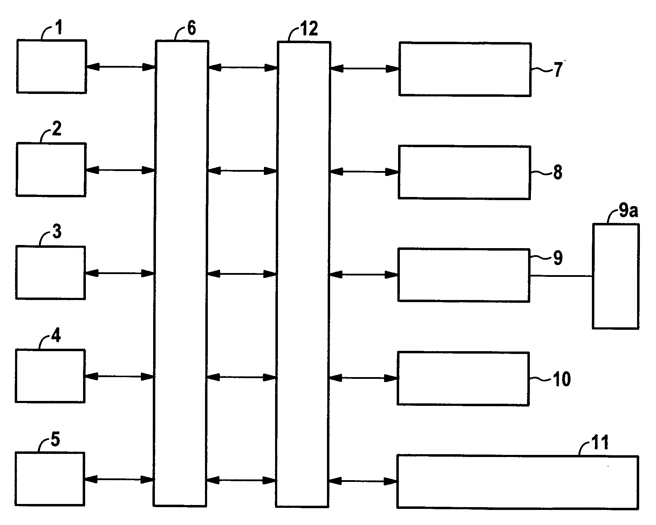

Ein Ausführungsbeispiel für das Verfahren und die Vorrichtung zur Bearbeitung von Daten nach der Erfindung wird anhand der Zeichnung näher erläutert:

Die Zeichnung zeigt fünf verschiedene Stationen 1 bis 5 zur Eingabe und Ausgabe von Daten. Diese Stationen 1 bis 5 gehören unterschiedlichen Beteiligten eines Projektes, z.B. einem Projektmitarbeiter (Station 1), dem Projektleiter (Station 2), einem Partner (Station 3), einem Kunden (Station 4) und einem Lieferanten (Station 5). Alle diese Stationen 1 bis 5 stehen mit einem Portal 6 in Verbindung. In diesem Portal 6 werden die von den Stationen 1 bis 5 ankommenden Signale, die sehr unterschiedlich sein können, in Signale umgewandelt, die von bestimmten Prozessoren 7 bis 11 lesbar sind. Diese Prozessoren 7 bis 11 sind alle an das Portal 6 angeschlossen. Die Prozessoren 7 bis 11 können zum Teil auch untereinander vernetzt sein oder wie der Prozessor 9 zweiteilig aufgebaut sein, wobei der angeschlossene zweite Teil ein CAD-System 9a sein kann.

Der erste Prozessor 7 dient z.B. zur Planung, zum Einkauf, zur Stücklistenerstellung und zur Rechnungsstellung. Der zweite Prozessor 8 dient z.B. zur Erstellung des Terminplans und des Resourcenplans. Der dritte Prozessor 9 kann z.B. die Systemstruktur bewältigen. Der vierte Prozessor 10 hat z.B. Dokumentationsaufgaben, während der fünfte Prozessor 11 der Information vorbehalten sein kann.

Im Portal 6 können auch von den Prozessoren 7 bis 11 ausgehende Signale in solche Signale umgewandelt werden, die in den Stationen 1 bis 5 lesbar sind. Auf diese Weise ist ein Datenaustausch zwischen den Stationen 1 bis 5 und den Prozessoren 7 bis 11 in einfacher Weise schnell und zuverlässig durchführbar.

Dem Portal 6 ist als zusätzliches System zur Umwandlung von Signalen ein als solches bekanntes EAI-System 12 zugeordnet, das auch Middleware-System genannt wird.

Dadurch wird eine weltweite Verknüpfung von Stationen 1 bis 5 und Prozessoren 7 bis 11 erleichtert.

## Patentansprüche

1. Verfahren zur Bearbeitung von Daten, wobei diese von mindestens drei Einheiten, von denen mindestens eine eine Station (1 bis 5) zur Eingabe und Ausgabe von Daten eines Projekts und mindestens eine ein Prozessor (7 bis 11) ist, ausgetauscht werden,
**dadurch gekennzeichnet, dass** ein Signal der Station(en) (1 bis 5) in ein von den(den) Prozessor(en) (7 bis 11) lesbares Signal und/oder ein Signal des Prozessors(der Prozessoren) (7 bis 11) in ein von der(den) Station(en) (1 bis 5) lesbares Signal umgewandelt werden.

2. Verfahren nach Anspruch 1,
**dadurch gekennzeichnet, dass** das vom Prozessor (7 bis 11) lesbare Signal und/oder das Signal des Prozessors (7 bis 11) über das Internet versandt werden.

3. Verfahren nach einem der Ansprüche 1 oder 2,
**dadurch gekennzeichnet, dass** das Signal der Station (1 bis 5) und/oder das von der Station (1 bis 5) lesbare Signal über das Internet versandt werden.

4. Verfahren nach einem der Ansprüche 1 bis 3,
**dadurch gekennzeichnet, dass** die lesbaren Signale standardisiert werden.

5. Vorrichtung zur Bearbeitung von Daten mit mindestens drei Einheiten, von denen mindestens eine eine Station (1 bis 5) zur Eingabe und Ausgabe von Daten eines Projekts und mindestens eine ein Prozessor (7 bis 11) ist,
**dadurch gekennzeichnet, dass** zwischen die mindestens eine Station (1 bis 5) und den mindestens einen Prozessor (7 bis 11) ein Portal (6) geschaltet ist, in dem ein Wandler vorhanden ist zum Umwandeln eines Signals der Station(en) (1 bis 5) in ein von dem(den) Prozessor(en) (7 bis 11) lesbares Signal und/oder zum Umwandeln eines Signals des Prozessors(der Prozessoren) (7 bis 11) in ein von der(den) Station(en) (1 bis 5) lesbares Signal.

6. Vorrichtung nach Anspruch 5,
**dadurch gekennzeichnet, dass** das Portal (6) über das Internet mit dem mindestens ein Prozessor (7 bis 11) verbunden ist.

7. Vorrichtung nach einem der Ansprüche 5 oder 6,
**dadurch gekennzeichnet, dass** die mindestens eine Station (1 bis 5) über das Internet mit dem Portal (6) verbunden ist.

8. Vorrichtung nach einem der Ansprüche 5 bis 7,
**dadurch gekennzeichnet, dass** dem Portal (6) ein EAI-System (12) zugeordnet ist.
